# EUROPEAN PATENT SPECIFICATION

(11) **EP 1 597 341 B1**
(45) Date of publication and mention of the grant of the patent: **03.06.2015**
(21) Application number: 04701858.5
(22) Date of filing: 13.01.2004
(51) Int. Cl.: C10K 3/04, C01B 3/16

(54) **IMPROVED PROCESS FOR SHIFT CONVERSION**
VERBESSERTE VERFAHREN ZUR SHIFT-KONVERTIERUNG
PROCESSUS AMELIORE DE CONVERSION

(30) Priority: 13.01.2003 US 439912 P
(43) Date of publication of application: 23.11.2005
(73) Proprietor: FLUOR CORPORATION, Aliso Viejo, CA 92698 (US)
(72) Inventor: Rao, Ashok, Aliso Viejo, CA 92656 (US); Strohler, Keith, Aliso Viejo, CA 92656 (US)
(74) Representative: Dr. Graf & Partner AG
(86) International application number: PCT/US2004/000926
(87) International publication number: WO 2004/062764

(56) References cited:
- US-A- 3 904 389
- US-A- 4 161 393
- US-A- 4 383 837
- US-A- 4 476 683
- US-A- 4 863 707

## Description

### Field of The Invention

The field of the invention is hydrogen production, and especially hydrogen production from synthesis gas relates with reduced steam consumption while maintaining predetermined design values for a hydrogen to carbon monoxide ratio.

### Background of The Invention

Numerous processes are known in the art to produce hydrogen from various materials, including steam reforming of natural gas, syngas, or naphtha, catalytic reforming of heavy straight run gasoline or heavy oils (e.g., fuel oil), and partial oxidation of heavy oils or natural gas. Steam reforming of hydrocarbonaceous material is particularly advantageous due to the relatively simple configuration and relatively robust operation. However, generation of steam for the reforming process requires often relatively large quantities of energy.

To reduce the energy demand for steam production, steam may be internally provided by quenching hot gas from the reformer in direct contact with water as described in U.S. Pat. No. 3,545,926 to Schlinger et al., or U.S. Pat. No. 5,152,975 to Fong. Such configurations may provide a significant reduction in energy consumption for steam production. However, depending on the particular operating conditions, it may be necessary to heat the quenched gas prior to entry into the shift converter, which reduces the energy savings to at least some degree.

Alternatively, the reforming process may be split into two sections in which the feed gas is reformed with steam in the first section and with oxygen in the second section as described in U.S. Pat. Nos. 4,782,096 and 4,999,133 to Banquy. While such configurations generally require less overall steam as compared to a conventional steam reforming processes, several disadvantages nevertheless remain. Among other things, operation of the second section generally requires an oxygen rich gas (typically comprising 80 vol% or even more oxygen), which has to be generated in an air separation or other oxygen enrichment equipment.

US4161393 teaches configurations and processes for gasification of a solid fuel to produce a raw gas that is saturated with water vapor. The so formed gas stream is then subjcted to shift conversion. Therefore, while various configurations and methods for steam-based production of hydrogen-containing gases are known in the art, all or almost all of them suffer from one or more disadvantages. Consequently, there is still a need to provide improved configurations and methods to reduce energy costs associated with steam consumption in various hydrogen production plants, and especially in steam shifting/reforming, partial oxidation, or gasification plants.

### Brief Description of The Drawing

Figure 1 is a schematic of an exemplary configuration for hydrogen production from synthesis gas according to the inventive subject matter.
Figure 2 is a prior art schematic of a known configuration for hydrogen production from synthesis gas.
Figure 3 is a table indicating composition, flow rate, and temperature of various streams of the configuration of Figure 1.
Figure 4 is a table indicating composition, flow rate, and temperature of various streams of the configuration of Figure 2.
Figure 5 is a schematic of another exemplary configuration for hydrogen production from synthesis gas according to the inventive subject matter.
Figure 6 is a table indicating exemplary operating conditions of the configuration of Figure 5.
Figures 7A-7D are tables indicating material balances for first and second stages of cases 1 and 2 of Figure 6.

### Summary of the invention

The present invention is directed to methods of H2 production from a feed gas in which the demand for steam or humidification is significantly reduced by splitting the feed gas such that one portion is fed into a first shift reactor and another portion is combined with the first shift reactor effluent before entering a second shift reactor.

A plant used to carry out the method of the invention includes a first shift reactor and a second shift reactor, wherein the first shift reactor receives a first portion of syngas from a gasification unit or partial oxidation unit to form a first shift reactor effluent, and wherein the second shift reactor receives a combination of the first shift reactor effluent and a second portion of the syngas to form a second shift reactor effluent.

In the plant, the second portion of the syngas is combined with the first shift reactor effluent in an amount effective to reduce steam demand by at least 10%, more typically at least 35%, and even more typically at least 45%. Alternatively, where the water is provided to the syngas via humidification of the syngas, it is preferred that the second portion of the syngas is combined with the first shift reactor effluent in an amount effective to reduce water and/or energy consumption of the humidifier by at least 10%, more typically at least 20%, and even more typically by at least 35%. Therefore, especially preferred second portions of the syngas will be between 50 vol% to 75 vol% of the total syngas.

The syngas includes carbon monoxide and hydrogen at a molar ratio of at least 2:1, and that yet another portion of the syngas may be bypassed around the first and second shift reactors for combination with the second shift reactor effluent. Furthermore, suitable plants may also include an acid gas removal unit that is coupled to the second shift reactor to remove carbon dioxide from the second shift reactor effluent.

Therefore, a method of operating a plant will include one step in which a first shift reactor and a second shift reactor are provided. In another step, a syngas stream from a gasification unit or a partial oxidation unit is split into a first portion and a second portion, wherein the first portion is fed to the first shift reactor to form a first shift reactor effluent. In a further step, the first shift reactor effluent is combined with the second portion to form a mixed feed gas, and in yet another step, the mixed feed gas is reacted in the second shift reactor to form a second shift reactor effluent. In such methods the second portion is combined with the first shift reactor effluent in an amount effective to reduce steam consumption in the first and second shift reactors. With respect to the components, conditions, and further configurations, the same considerations as provided above apply.

Various objects, features, aspects and advantages of the present invention will become more apparent from the following detailed description of preferred embodiments of the invention along with the drawing.

### Detailed Description

In most currently known configurations for production of hydrogen from synthesis gas, and particularly from synthesis gas with high carbon monoxide to hydrogen ratio, steam is typically required in quantities far in excess of the amount required by stoichiometry for the shift reaction (CO + H2O → H2 + CO2). The inventors now unexpectedly discovered that the excess steam used in the production of hydrogen from syngas predominantly serves to limit the temperature rise across the catalytic reactor, as the shift reaction is highly exothermic (ΔH is about -40.6 KJ/mol).

Therefore, the inventors contemplate a process configuration in which oxidation of CO to CO2 is spread over at least one additional shift reactor to reduce heat generation. In one preferred aspect of the inventive subject matter, the inventors contemplate a plant in which a first fraction of the total feed gas is bypassed around a first shift reactor to reduce the amount of produced heat and thus to reduce the amount of required steam. A second fraction of the total feed gas is combined with the processed first fraction and then fed into a second shift reactor to complete the conversion of the total feed gas.

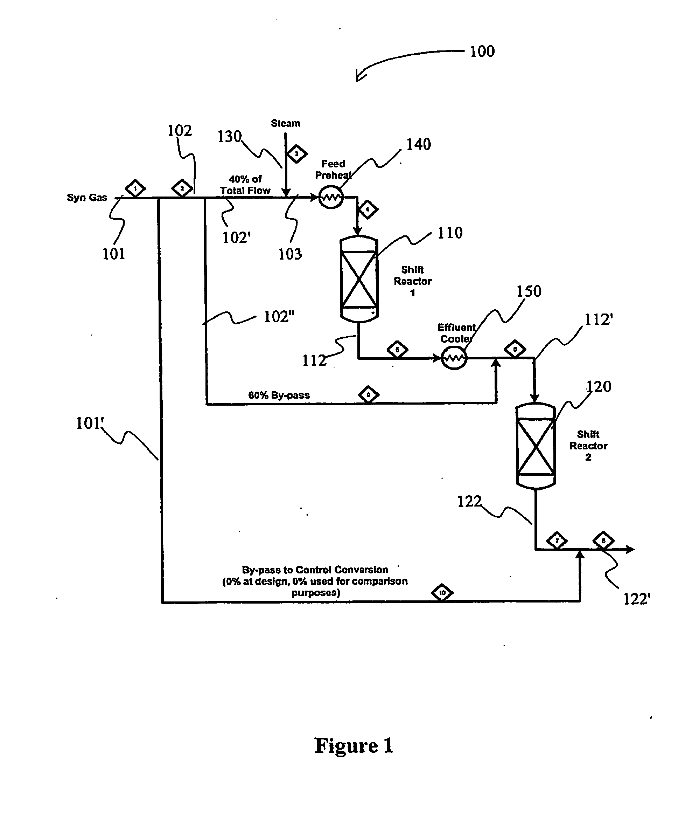

One exemplary contemplated configuration is depicted in Figure 1 in which a plant 100 includes a shift conversion unit having a first shift reactor 110 and a second shift reactor 120. Syngas stream 101 (or syngas stream 102 where a bypass is employed; see below) is split into a first portion 102' and a second portion 102", wherein the first portion (here: about 40 vol% of total feed gas stream 101 or 102) is combined with steam 130 to form stream 103. The second feed portion 102" (here: about 60 vol% of total feed gas stream 101 or 102) bypasses the first shift reactor 110.

Stream 103 may be preheated by feed preheater 140 before entering first shift reactor 110. The first shift reactor effluent 112 is then cooled by effluent cooler 150, and the cooled effluent 112 is combined with the second portion 102" to form mixed feed stream 112', which is then fed to the second shift reactor 120. The effluent 122 from the second shift reactor 120 may be combined with bypass stream 101' (which may be drawn from the syngas stream 101 to control total conversion) to form hydrogen rich product stream 122'.

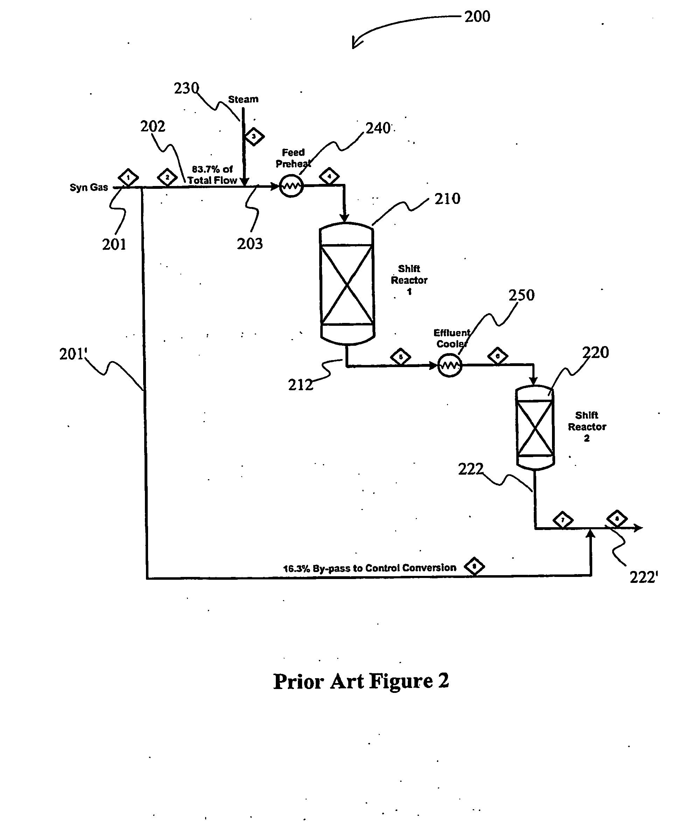

For comparison, **Prior Art** **Figure 2** depicts a typical steam shift configuration 200 in which a first shift reactor 210 and a second shift reactor 220 provide conversion of a syngas stream 201 to a hydrogen rich product stream 222' with the same amount of CO shifted to H2 as the previous case (*i.e*., same H2 to CO ratio as in stream 222'). More particularly, syngas stream 201 is divided into feed stream 202 (typically about 83 vol% of syngas stream 201) and bypass stream 201' (typically about 17 vol% of syngas stream 201). The syngas stream 202 is combined with steam 230 to form stream 203, which is preheated by feed preheater 240 before entering the first shift reactor 210. The effluent 212 from first shift reactor 210 is then cooled by effluent cooler 250 and is fed to the second shift reactor 220. The effluent 222 from the second shift reactor 220 is combined with bypass stream 210' (to control conversion) to form hydrogen rich product stream 222'.

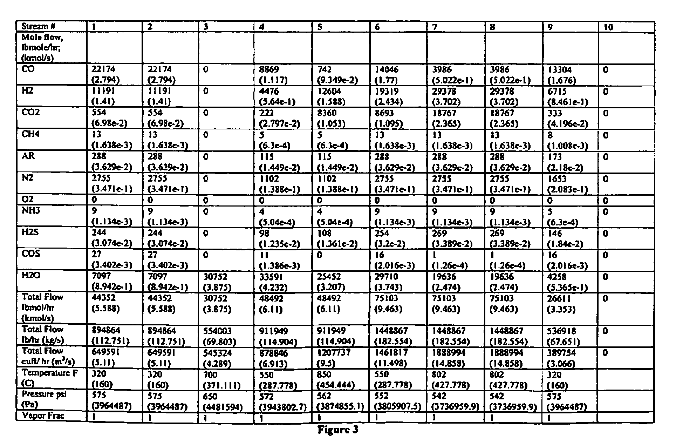

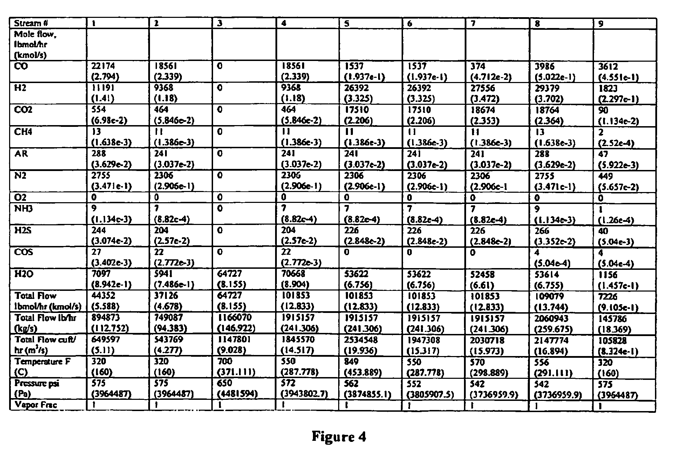

Exemplary calculated compositions, flow rates, and temperatures of various streams in the plants according to Figures 1 and 2 are indicated in the Tables of **Figures 3** **and** **4****,** respectively. In the tables, columns with underlined numerals at the top refer to streams in Figures 1 and 2 denoted with corresponding numerals in diamonds.

Thus, it should be recognized that the inventors contemplate a plant comprising a first shift reactor and a second shift reactor, wherein the first shift reactor receives a first portion of a syngas from a gasification unit or a partial oxidation unit and forms a first shift reactor effluent, and wherein the second shift reactor receives a combination of the first shift reactor effluent and a second portion of the syngas to form a second shift reactor effluent.

With respect to suitable feed gases it is contemplated that various gases are deemed appropriate so long as such gases include a significant proportion of CO (typically at least 5-10 mol%, more typically at least 20 mol%, and most typically at least 40 mol%). Therefore, the chemical composition of the feed gas may vary considerably, and a particular composition will predominantly depend on the specific origin of the feed gas. However the feed gas is a syngas from a gasification plant or partial oxidation unit. Thus, particularly preferred feed gases will typically have a carbon monoxide to hydrogen ratio in excess of 2.0, more typically in excess of 2.2, and most typically in excess of 2.4 (e.g., typical

syngas comprises 50 mol% carbon monoxide, 20 mol% hydrogen, the balance including nitrogen, carbon dioxide, sulfurous compounds, and inert gases).

Furthermore, it is contemplated that the feed gas pressure may vary considerably, and it should be appreciated that suitable pressures include a wide range, typically between 345 kPa (50 psi) and 10343 kPa (1500 psi). Thus, where suitable a feed gas booster or compressor may be employed where the feed gas pressure is relatively low. Alternatively, and especially where the feed gas pressure is relatively high, a turbine expander or other pressure reducing device may be used to reduce a pressure desired for the shift reaction.

With respect to the splitting of the feed gas stream, it is generally contemplated that the first portion and the second portion may vary, and suitable first portions are between 35% and 45% of the feed gas flow before the split into first and second portions. The feed gas is (or comprises) syngas from a gasification reactor or partial oxidation unit, the first portion of the feed gas is between 35 vol% to about 45 vol% of the feed gas. Consequently, suitable second portions will be in the range of 55% and 65% of the feed gas flow before the split into first and second portions. Second portions will range between 55 vol% to 65 vol% of the syngas from the gasification unit or partial oxidation unit.

Moreover, and especially where it is desirable to control the final composition of the processed feed gas, contemplated plants may further include a bypass that combines part of the feed gas with the effluent gas from the second shift reactor. It is further contemplated that the particular amount of feed gas that is bypassed around the first and second shift reactors may vary considerably, and generally contemplated amounts are between 0 vol% and about 25 vol%, and more typically between about 0 vol% and about 15 vol%.

Based on calculations using configurations according to Figures 1 and 2, the inventors determined that by bypassing a portion of the syngas around the first shift reactor, the steam consumption can be reduced by as much as 50 to 60 percent (see Figure 3 and 4). However, in such configurations it should be appreciated that the particular savings will depend to at least some degree on the carbon monoxide/hydrogen ratio of the feed gas. Thus, contemplated configurations may reduce the steam demand by at least 10%, more typically at least 35%, and even higher (as compared to a configuration without bypass of the first shift reactor and same operating parameters as exemplified in the tables). The so saved steam may then be utilized for other processes, and especially for the generation of power. For example, in a commercial sized power plant with a total equivalent power capacity of 400 MW, the calculated power that may be generated from the saved steam is in excess of 50 MW.

Alternatively, or additionally, the syngas may also be humidified in a humidifier. In such configurations, it is generally contemplated that the amount of water used by the humidifier may be significantly reduced by splitting the humidified feed gas as already described above. Thus, contemplated plant also include those in which the syngas is humidified in a. humidifier before entering the first shift reactor, wherein the second portion of the syngas is combined with the first shift reactor effluent in an amount effective to reduce water consumption of the humidifier by at least 10%, more typically at least 20%, and even more typically at least 30% (as compared to a configuration without bypass of the first shift reactor and same operating parameters as exemplified in the tables). It should be especially noted that in configurations where the steam is introduced by humidification of the syngas, contemplated configurations will not only reduce the amount of heat required by the humidifier but also the size of the equipment associated with the humidification operation.

In addition to reducing the steam usage or extent of humidification, it should be recognized that contemplated configurations will also reduce the amount of condensate generated downstream of the shift unit(s) when the shifted gas is cooled for carbon dioxide removal, which advantageously reduces the amount of condensate to be treated. Moreover, in at least some instances, the inlet temperature of the second shift reactor in conventional configurations (see *e*.*g*. Figure 2) is determined by the dew point of the feed gas. In contrast, the dew point of the feed gas to the second shift reactor in contemplated configurations is lower (as compared to conventional configurations), and thus the second reactor may be operated closer to its optimum operating temperature without being constrained by the dew point of the feed gas.

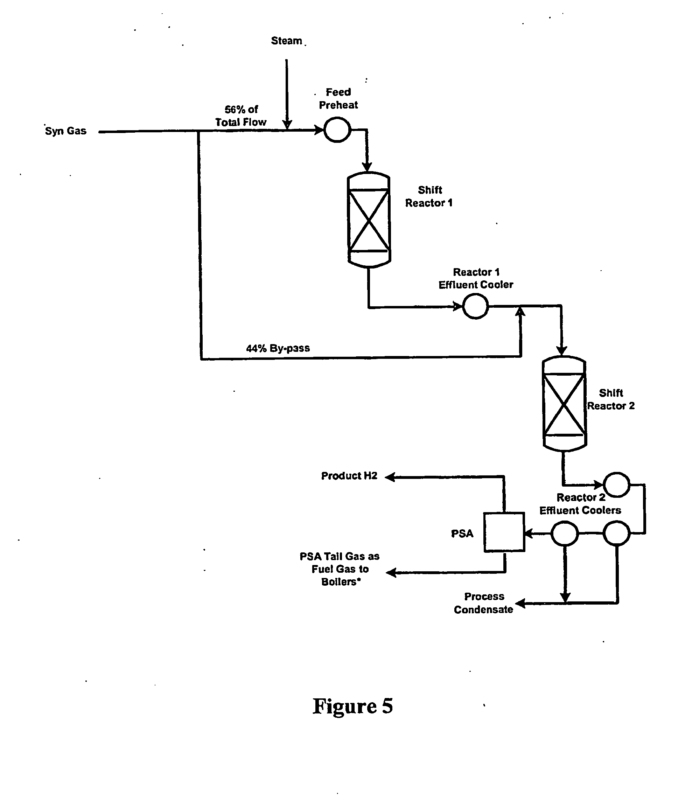

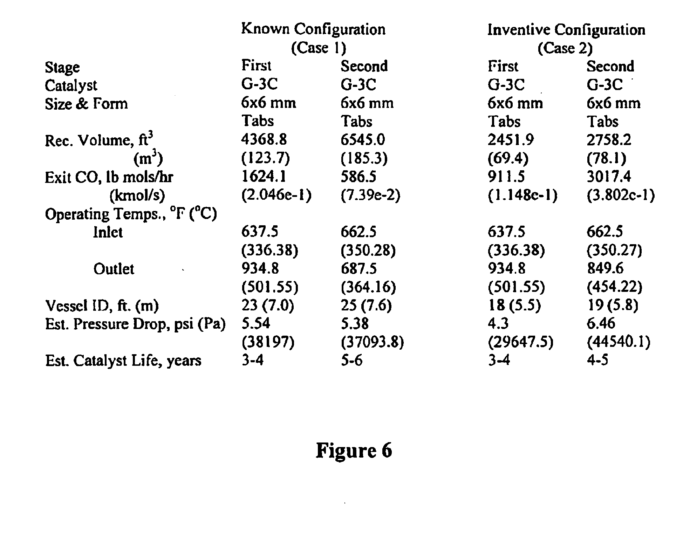

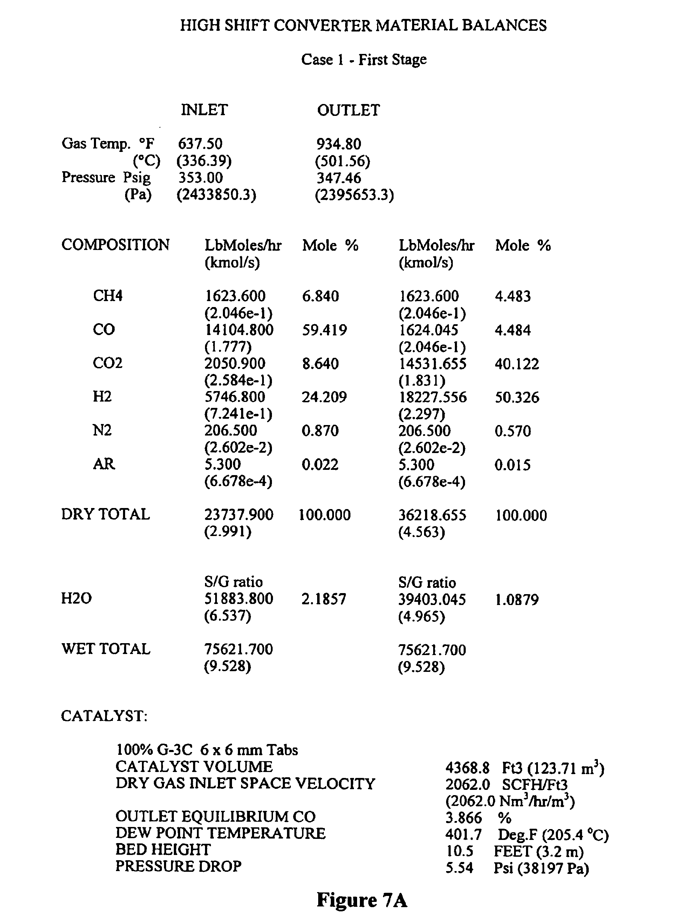

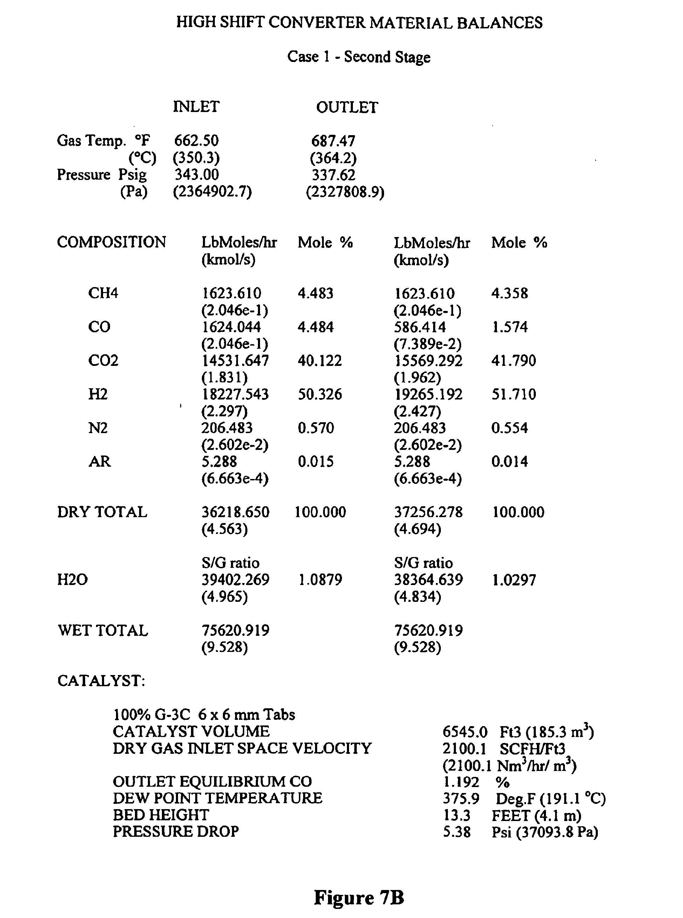

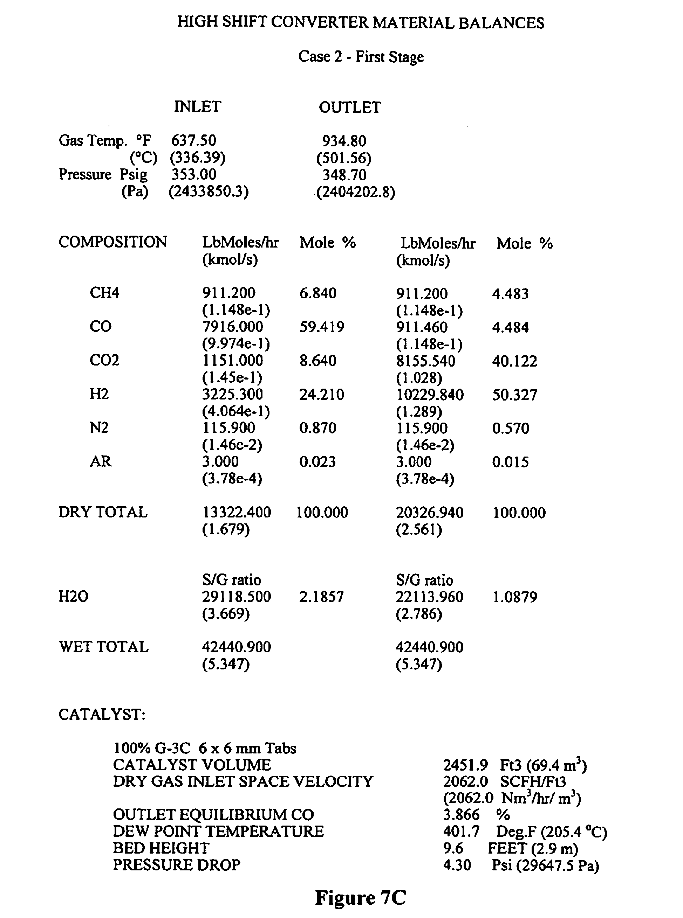

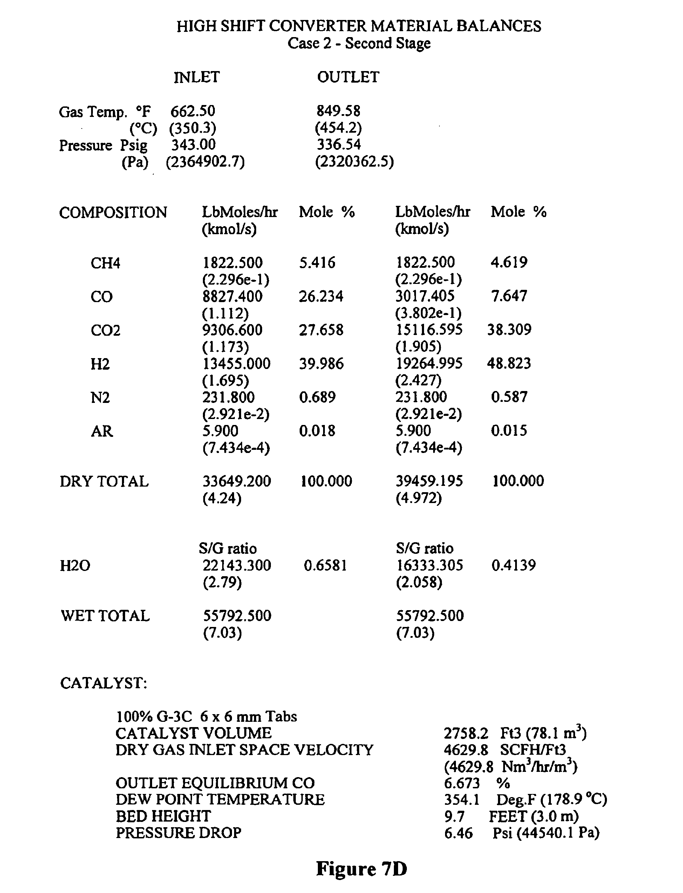

Similar advantages were also observed in calculations for configurations according to **Figure** 5, in which about 44% of the feed syngas was bypassed around the first reactor with no additional bypass around the second reactor. The same configuration as depicted in Figure 5 was operated without bypass around the first reactor to serve as a comparative example for calculations shown in the tables of **Figure 6** (operating conditions) and **Figures 7A-7D** (material balances). The term "about" when used herein in conjunction with a numeral refers to a value range of +/- 10%, inclusive, of the value of that numeral.

The configuration of Figure 5 is particularly suited for an IGCC plant with CoP gasifiers and boilers to provide export steam to the refinery. However, in alternative embodiments, it should be recognized that the tail gas may be compressed and supplied to the gas turbines of the IGCC, or recycled at least in part after CO2 extraction to increase H2 production. Calculated data were developed in the two cases for a constant molar rate of H2 contained in the PSA feed gas and are summarized below:

| | Known Configuration (Case 1) | Inventive Configuration (Case 2) |
|---|---|---|
| Steam Required, kg/s (lb/h) | 117.7 (934690) | 66.1 (524570) |
| Process Condensate Produced, kg/s (lb/h) | 87.1 (691150) | 37.1 (294240) |
| | | |
| Catalyst Volume, m³ (Ft3) | | |
| 1^{st} Bed | 123.7 (4369) | 69.4 (2452) |
| 2^{nd} Bed | 185.3 (6545) | 78.1 (2758) |
| Total Volume | 309.0(10914) | 147.5 (5210) |
| | | |
| PSA | | |
| Feed Gas Flow Rate, kmol /s (moles/h) | 4.695 (37260) | 4.972 (39459) |
| H2 Conc. in Feed Gas, mole % | 52 | 49 |

As can be seen in the above table, the steam and catalyst requirements as well as the condensate produced downstream of the shift unit are significantly reduced. Moreover, the size of the heat exchangers for the contemplated shift units are also significantly reduced. The size of the PSA unit on the other hand will be larger in the case of the improved shift design since the amount of gas to be treated in the PSA unit is slightly higher while its H2 concentration lower.

It should further be noted that the larger amount (energy contcnt) of tail gas generated in the PSA unit in such configurations displaces an equivalent amount of syngas (unshifted) that would be fired in the boilers in the IGCC plant. In other applications of coproducing power and H2, and especially where low pressure fuel gas is not required, the PSA tail gas may be compressed and supplied to the gas turbine after combining with the syngas, or a

With respect to the shift reactors, it should be recognized that all known types and sizes may be used in conjunction with the configuration according to the inventive subject matter, and may further comprise one or more suitable catalysts. For example, where the shift reaction is performed at a relatively high temperature (*e*.*g*., about 590-720 °K), the catalyst may be based on iron-oxide. On the other hand, where the shift reaction is performed at a relatively low temperature (*e.g.,* about 470-520 °K), Cu-, Zn-, and/or Al-based catalyst may be employed. Similarly, it should be appreciated that all known feed heaters and effluent coolers are suitable for use in conjunction with the teachings presented herein.

It should still further be appreciated that methods according to the inventive subject matter are especially suitable for plants in which deep carbon monoxide conversion is not required (*e*.*g*., remaining carbon monoxide in stream 122' between 5-15 mol%, and more typically between 5-10 mol%). For example, suitable plants include those that coproduce a fuel gas that may be supplied to a gas turbine or fuel cell and/or a fired equipment (*e*.*g*., using a furnace or boiler), wherein the high purity hydrogen for such plants is provided via membranes and/or a pressure swing adsorption unit that purifies the shifted gas.

Alternatively, contemplated methods and configurations may also be employed as retrofit in various petrochemical plants that consume hydrogen, which is currently generated from natural gas. Replacement of such hydrogen production with hydrogen production from gasification of alternative fuels (*e.g*., refinery residues or coal) may be especially advantageous in view of environmental as well as economical aspects. Among other things, penalties for carbon dioxide emission may be reduced using contemplated configurations in which hydrogen is produced from syngas generated from coal or other cheap fuel and combusted in the gas turbine of a combined cycle, while the carbon dioxide is separated from the shifted gas using an acid gas removal unit and sequestered.

In still another example, contemplated configurations and methods may become increasingly attractive to crude oil refineries as the quality of crude oil decreases with an concomitant increase in low quality heavy residues (*e*.*g*., heavy oils or coke) production. Such heavy residues may be consumed (*e*.*g*., via hydrogenation and/or hydrocracking) within the plant using hydrogen generated by configurations and methods presented herein. In yet further examples, contemplated configurations and methods may be employed in synthesis plants (*e*.*g*., plants producing methanol, dimethyl ether, Fischer Tropsch liquids, etc.) that require adjustment of the carbon monoxide to hydrogen ratio in the feed gas.

Therefore, the inventors contemplate a method of operating a plant (and particularly to reduce steam consumption in a shift conversion processes in such operations), in which in one step a first shift reactor and a second shift reactor are provided. In another step, a syngas feed from a gasification unit or a partial oxidation unit is split into a first portion and a second portion, and the first portion is fed to the first shift reactor to form a first shift reactor effluent. In still another step, the first shift reactor effluent is combined with the second portion to form a mixed feed gas, and the mixed feed gas is reacted in the second shift reactor to form a second shift reactor effluent, wherein the second portion is combined with the first shift reactor effluent in an amount effective to reduce steam consumption (via separate steam stream or via humidification) in the first and second shift reactors. Furthermore, it should be noted that contemplated configurations and methods are not limited to two-reactor systems. For example, a series of three or more reactors may be utilized in which the gas by-passed around one reactor is fed to a reactor downstream of that reactor.

Thus, specific embodiments and applications of improved configurations and processes for a shift reaction have been disclosed.

## Claims

1. A method of operating a plant (100), comprising:
providing a first shift reactor (110) and a second shift reactor (120);
splitting a syngas (102) from a gasification unit or a partial oxidation unit into a first portion (102') and a second portion (102"), and feeding the first portion (102') to the first shift reactor (110) to form a first shift reactor effluent (112);
combining the first shift reactor effluent (112) with the second portion (102") to form a mixed feed stream (112'), and reacting the mixed feed stream (112') in the second shift reactor (120) to form a second shift reactor effluent (122);
wherein the second portion (102") is combined with the first shift reactor effluent (112) in an amount effective to reduce steam consumption in the first and second shift reactors (110,120), wherein the syngas (102) includes carbon monoxide and hydrogen in a molar ratio of at least 2:1, and wherein the first portion (102') has a volume of between 35 vol% to 45 vol% of the syngas (102).

2. The method of claim 1 further comprising providing a bypass that combines a third portion (101') of the syngas with the second shift reactor effluent (122).

3. The method of claim 1 further comprising coupling an acid gas removal unit to the second shift reactor (120), and removing carbon dioxide from the second shift reactor effluent (122) in the acid gas removal unit.

## Patentansprüche

1. Verfahren zum Betrieb einer Anlage (100), umfassend:
das Bereitstellen eines ersten Shift-Reaktors (110) und eines zweiten Shift-Reaktors (120);
das Aufspalten eines Syngases (102) aus einer Vergasungseinheit oder einer Partialoxidationseinheit in einen ersten Teil (102') und einen zweiten Teil (102"') und das Zuführen des ersten Teils (102') zum ersten Shift-Reaktor (110) zur Bildung eines Austragsstroms (112) aus dem ersten Shift-Reaktor;
das Kombinieren des Austragsstroms (112) aus dem ersten Shift-Reaktor mit dem zweiten Teil (102") zur Bildung eines gemischten Einsatzstroms (112') und das Umsetzen des gemischten Einsatzstroms (112') im zweiten Shift-Reaktor (120) zur Bildung eines Austragsstroms (122) aus dem zweiten Shift-Reaktor;
wobei der zweite Teil (102") in einer zur Verringerung des Wasserdampfverbrauchs im ersten und zweiten Shift-Reaktor (110, 120) wirksamen Menge mit dem Austragsstrom (112) aus dem ersten Shift-Reaktor kombiniert wird, wobei das Syngas (102) Kohlenmonoxid und Wasserstoff in einem Molverhältnis von mindestens 2:1 enthält, und wobei der erste Teil (102') ein Volumen zwischen 35 Vol.-% und bis 45 Vol.-% des Syngases (102) aufweist.

2. Verfahren nach Anspruch 1, ferner umfassend das Bereitstellen einer Umgehung, die einen dritten Teil (101') des Syngases mit dem Austragsstrom (122) aus dem zweiten Shift-Reaktor kombiniert.

3. Verfahren nach Anspruch 1, ferner umfassend das Koppeln einer Sauergasentfernungseinheit an den zweiten Shift-Reaktor (120) und das Entfernen von Kohlendioxid aus dem Austragsstrom (122) aus dem zweiten Shift-Reaktor in der Sauergasentfernungseinheit.

## Revendications

1. Procédé de fonctionnement d'une installation (100), comprenant :
fournir un premier réacteur de conversion (110) et un deuxième réacteur de conversion (120) ;
séparer un gaz de synthèse (102) d'une unité de gazéification ou d'une unité d'oxydation partielle en une première portion (102') et une deuxième portion (102"), et acheminer la première portion (102') au premier réacteur de conversion (110) pour former un effluent (112) de premier réacteur de conversion ;
combiner l'effluent (112) de premier réacteur de conversion avec la deuxième portion (102") pour former un courant d'alimentation mélangé (112'), et faire réagir le courant d'alimentation mélangé (112') dans le deuxième réacteur de conversion (120) pour former un effluent (122) de deuxième réacteur de conversion ;
la deuxième portion (102") étant combinée avec l'effluent (112) de premier réacteur de conversion dans une quantité efficace pour réduire la consommation de vapeur dans les premier et deuxième réacteurs de conversion (110, 120), le gaz de synthèse (102) comportant du monoxyde de carbone et de l'hydrogène dans un rapport molaire d'au moins 2:1, et la première portion (102') ayant un volume compris entre 35 % en volume et 45 % en volume du gaz de synthèse (102).

2. Procédé selon la revendication 1, comprenant en outre de fournir une dérivation qui combine une troisième portion (101') du gaz de synthèse avec l'effluent (122) de deuxième réacteur de conversion.

3. Procédé selon la revendication 1, comprenant en outre d'accoupler une unité d'élimination des gaz acides au deuxième réacteur de conversion (120), et d'éliminer le dioxyde de carbone de l'effluent (122) de deuxième réacteur de conversion dans l'unité d'élimination des gaz acides.
